# EUROPÄISCHE PATENTSCHRIFT

(11) **EP 1 369 277 B1**
(45) Veröffentlichungstag und Bekanntmachung des Hinweises auf die Patenterteilung: **06.05.2015**
(21) Anmeldenummer: 03012342.6
(22) Anmeldetag: 30.05.2003
(51) Int. Cl.: B60J 7/20

(54) **Cabriolet-Fahrzeug**
Convertible vehicle
Véhicule convertible

(30) Priorität: 05.06.2002 DE 10224834
(43) Veröffentlichungstag der Anmeldung: 10.12.2003
(73) Patentinhaber: Valmet Automotive Oy, 23500 Uusikaupunki (FI)
(72) Erfinder: Russke, Klaus, 49143 Bissendorf (DE); Heselhaus, Udo, 49479 Ibbenbüren (DE)
(74) Vertreter: Kronthaler, Schmidt & Coll.

(56) Entgegenhaltungen:
- DE-A- 10 039 682
- DE-A- 10 052 001
- US-A- 3 377 099
- US-A- 5 743 587
- US-A- 6 145 915

## Beschreibung

Die Erfindung betrifft ein Cabriolet-Fahrzeug mit einem unterhalb eines Heckdeckels ablegbaren Dach nach dem Oberbegriff des Anspruchs 1.

Bei derartigen Fahrzeugen ist es bekannt, den Heckdeckel als ganzes um eine im heckwärtigen Endbereich liegende, quer zum Fahrzeug verlaufende Achse aufzuschwenken, um dadurch die Durchtrittsöffnung für das zu öffnende oder zu schließende Dach freizugeben. Für eine Freigabe einer Aufnahmeöffnung für Gepäck, bei der in üblicher Weise der Kofferraum von hinten zugänglich sein soll, wird hingegen der Heckdeckel um eine in Fahrtrichtung weiter vorne liegende Horizontalachse gegensinnig verschwenkt.

Bei den genannten Bewegungsarten ist jedes Mal der gesamte Heckdeckel zu verlagern. In geöffneter Stellung ragt die der jeweiligen Schwenkachse am weitesten abgewandte Kante sehr hoch über das Fahrzeug hinaus, so daß insbesondere in niedrigen Garagen die Gefahr des Anschlagens gegeben ist. Zudem wird bei Freigabe der Durchtrittsöffnung für das Dach der hintere Bereich des Heckdeckels über die heckseitige Fahrzeugbegrenzung hinaus verschwenkt, wodurch auch nach hinten eine Anschlaggefahr, insbesondere in kurzen Parklücken mit dicht stehendem Hintermann oder einer dicht folgenden Begrenzung, gegeben sein kann. Das Fahrzeugheck muß zudem in Anpassung an das weite Aufschwenken der hinteren Kante des Heckdeckels eine optisch störende Ausnehmung aufweisen.

Die DE 100 39 680 A1 zeigt einen zweiteiligen Heckdeckel mit einer quer zum Fahrzeug verlaufenden Trennfuge, bei der das vor der Trennfuge liegende vordere Teil des Heckdeckels mit seiner vorderen Kante über Ausleger in seitlichen Führungen längs zur Fahrzeugerstreckung beweglich ist und dabei an der Trennfuge gegenüber dem hinteren Teil einschwenkt. Damit wird die Gesamthöhe des zur Freigabe der Durchtrittsöffnung für das Dach aufgeschwenkten Heckdeckels vermindert. Der Aufschwenkwinkel muß allerdings auch hier groß sein, um eine hinreichende Größe der Durchtrittsöffnung zu gewährleisten. Der Überstand des Heckdeckels über die hintere Fahrzeugbegrenzung hinaus ist daher auch in dieser Version vorhanden.

Aus der gattungsgemäßen US 3,377,099 ist ebenfalls ein Cabriolet-Fahrzeug bekannt, bei welchem ein Heckdeckel mehrteilig ausgeführt ist. Zur Freigabe eines Verdeckaufnahmeraums kann ein vorderer, schwenkbar an einer Karosserie angelenkter Teil aufgeschwenkt werden, wobei der vordere Teil in aufgeschwenkter Position teilweise oberhalb eines hinteren Teils des Heckdeckels angeordnet ist. Der hintere Teil des Heckdeckels ist zur Freigabe eines Gepäckaufnahmeraums ebenfalls an der Karosserie angelenkt.

Der Erfindung liegt das Problem zugrunde, ein Cabriolet-Fahrzeug mit einer verbesserten Öffnungskinematik des Heckdeckels bereitzustellen. Die Erfindung löst dieses Problem durch ein Cabriolet-Fahrzeug mit den Merkmalen des Anspruchs 1. Hinsichtlich vorteilhafter Ausgestaltungen wird auf die abhängigen Ansprüche 2 bis 11 verwiesen.

Erfindungsgemäß ist vorgesehen, dass das vorderste Teil in Ruhestellung nahezu oder vollständig horizontal liegt und während der Öffnung des Heckdeckels zur Freigabe der Durchtrittsöffnung für das Dach nahezu parallel aufwärts und heckwärts verlagert wird. Mit dieser zumindest bereichsweisen Übereinanderverlagerung von Teilen des Heckdeckels ist nicht nur die maximale Gesamthöhe der bewegten Teile bei Öffnung des Heckdeckels zur Freigabe der Durchtrittsöffnung für das Dach verringert, sondern das hinterste Teil kann in geöffnetem Zustand des Heckdeckels in einem geringeren Schwenkwinkel gegenüber der Karosserie stehen; es überragt somit weniger oder gar nicht die hintere Fahrzeugbegrenzung.

Wenn bei hierzu gegensinnigem Öffnen zur Freigabe einer Aufnahmeöffnung für Gepäck das vorderste Teil in Ruhe verbleibt, wird auch hier die Bauhöhe des geöffneten Heckdeckels verringert und somit die Anschlaggefahr vermindert.

Dabei kann bei einer auch im geöffneten Zustand des Heckdeckels im wesentlichen horizontalen Stellung des vordersten Teils eine insgesamt besonders geringe Aufstellhöhe des Heckdeckels bewirkt sein.

Eine zweiteilige Ausbildung des Heckdeckels ist mechanisch einfach zu verwirklichen; das vordere Teil kann bei seiner Verlagerung über das hintere Teil einen Wasserablauf über dieses realisieren, eine eigene Wasserkante am vorderen Teil ist entbehrlich.

Insbesondere ist es günstig, wenn das vordere Ende des vordersten Teils den hinteren Dachbereich in dessen geschlossenem Zustand untergreift und damit in Zusatzfunktion auch als Hutablage wirken kann. Eine Anpassung dieses Bereichs des Heckdeckels an die Innenraumgestaltung, etwa durch textilen Bezug, ist möglich, da dieser Bereich bei geschlossenem Dach unter diesem geschützt gehalten und bei geöffnetem Dach in gleicher Weise wie der übrige Fahrzeuginnenraum Witterungseinflüssen ausgesetzt ist.

Weitere Vorteile und Merkmale der Erfindung ergeben sich aus einem in der Zeichnung dargestellten und nachfolgend beschriebenen Ausführungsbeispiel des Gegenstandes der Erfindung.

In der Zeichnung zeigt:
- Fig. 1: eine schematische Seitenansicht des Heckbereichs eines erfindungsgemäßen Cabriolet-Fahrzeugs bei geschlos-senem Heckdeckel,
- Fig. 2: eine ähnliche Ansicht wie Figur 1 während der ersten Phase der Öffnung des Heckdeckels zur Freigabe der Durchtrittsöffnung für das Dach,
- Fig. 3: eine ähnliche Ansicht wie Fig. 2 bei weiter fortschreitender Öffnung des Heckdeckels,
- Fig. 4: eine ähnliche Ansicht wie Figur 3 bei vollständig geöffnetem Heckdeckel,
- Fig. 5: eine ähnliche Ansicht wie Figur 4 bei gegensinniger Öffnung des Heckdeckels zur Freigabe der Aufnahmeöffnung für Gepäck.

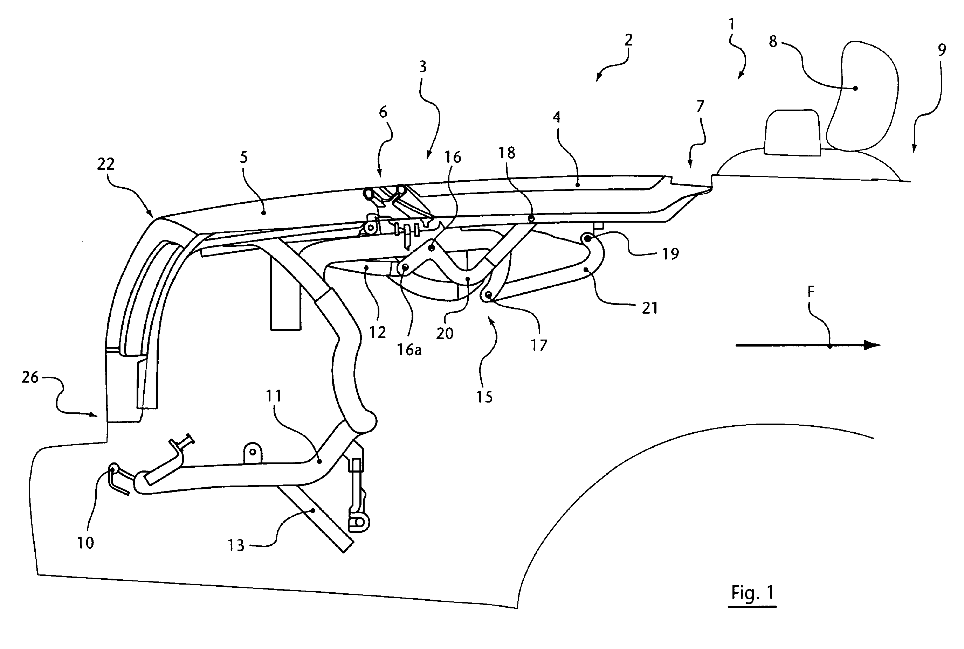

Das in Figur 1 dargestellte und insgesamt mit 1 bezeichnete Cabriolet-Fahrzeug weist in seinem Heckbereich 2 einen einen Aufnahmeraum für ein Dach abdeckenden oder freigebenden Heckdeckel 3 auf. Dieser ist im Ausführungsbeispiel zweiteilig ausgebildet und umfaßt ein vorderes Teil 4 und ein hinteres Teil 5, die an einer Fuge 6 aneinandergrenzen. Die Fuge 6 verläuft in Fahrzeugquerrichtung und kann insgesamt in Draufsicht bogenförmig ausgebildet sein.

Die zweiteilige Ausbildung ist nicht zwingend. Es ist auch möglich, daß zwischen dem in Fahrtrichtung F vordersten Teil 4 und dem hintersten Teil 5 ein oder mehrere weitere mitbewegliche Teile des Heckdeckels 3 liegen. Die zweiteilige Ausbildung ist jedoch konstruktiv besonders einfach und erfüllt eine hinreichende Reduzierung der Aufschwenkhöhe sowie des rückwärtigen Ausgreifens des geöffneten Heckdeckels 3.

Das Dach (nicht eingezeichnet) des Fahrzeugs 1 kann entweder vollständig oder teilweise starr und ansonsten flexibel ausgebildet sein. Ein hinterer Dachabschluß steht bei geschlossenem Dach auf dem vorderen Bereich 7 des vorderen Teils 4 auf. Dieser untergreift somit den hinteren Bereich des geschlossenen Dachs.

Im gezeichneten Ausführungsbeispiel ist der vordere Bereich 7 als schmale Auflagefläche dargestellt. Auch eine größere Erstreckung in Fahrtrichtung F bis zu der Sitzreihe 8 ist möglich. Dann kann der Bereich 7 etwa textil oder mit Leder bezogen und somit an die Gestaltung des Innenraums 9 angepaßt sein.

Der Heckdeckel 3 ist als Karosserieaußenteil aus starren Teilen 4, 5 gebildet. Diese bestehen entweder aus metallischen Werkstoffen oder Kunststoffen. Das hintere Teil 5 ist an einem um eine heckseitige Achse 10 aufschwenkbaren Hilfsrahmen 11 gehalten. Zur Bewirkung der Bewegung kann beispielsweise pro Fahrzeugseite jeweils zumindest ein Antriebsorgan 13 vorgesehen sein.

In seinem der hinteren Schwenkachse 10 abgewandten und an die Fuge 6 angrenzenden vorderen Bereich weist das hintere Teil 5 einen dem Verlauf der Fuge 6 folgenden Wasserablaufkanal 14 auf.

Das vordere Teil 4 ist über ein Mehrgelenk 15 an das hintere Teil angebunden. Im vorliegenden Ausführungsbeispiel ist dieses als Viergelenk ausgebildet und umfaßt die dem hinteren Teil 5 zugeordneten Gelenke 16, 17 sowie die dem vorderen Teil zugeordneten Gelenke 18, 19. Die Gelenke 16, 18 sind über einen hakenförmig abgebogenen Hebel 20 miteinander verbunden, die Gelenke 17, 19 über einen ebenfalls im Endbereich gebogenen Hebel 21.

Für die Bewegung des vorderen Teils 4 gegenüber dem hinteren Teil 5 kann oder können ein oder mehrere eigene(s) Antriebsorgan(e) vorgesehen sein. Auch ist es möglich, daß die Relativbewegung der Teile 4, 5 mittels des Antriebsorgans 13 über ein Zwischengetriebe 12 mit bewirkt wird. Das Zwischengetriebe 12 ist im gezeichneten Ausführungsbeispiel durch einen im wesentlichen in Fahrzeuglängsrichtung erstreckten Steuerhebel gebildet, der einenends an der Karosserie schwenkbar angelenkt ist und mit seinem entgegengesetzten freien Ende an einem Gelenk 16a angreift, durch dessen Bewegung das Viergelenk 15 zu öffnen oder zu schließen ist.

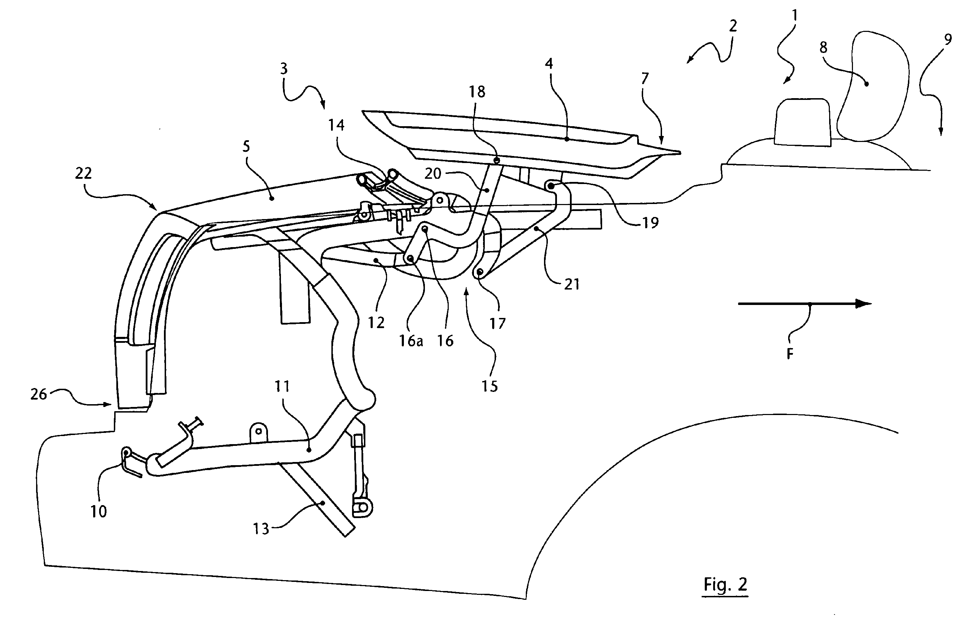

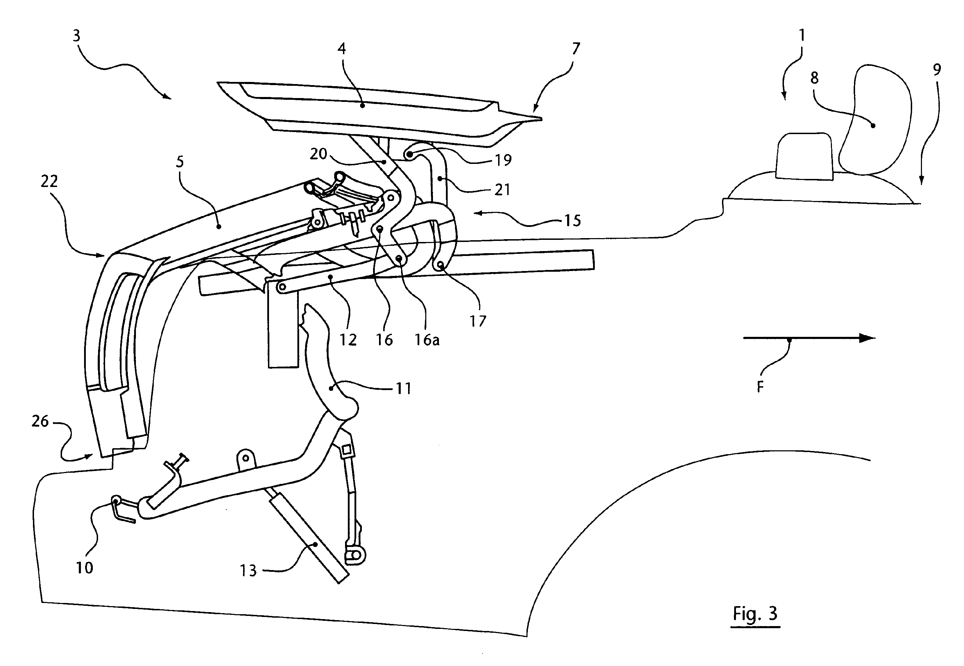

Aus dem in den Figuren 1 bis 4 dargestellten Ablauf wird deutlich, daß zur Öffnung des Heckdeckels 3 zunächst das hintere Teil 5 nahezu in geschlossener Ausgangsposition bleibt, während das vordere Teil 4 leicht angehoben wird (Figur 2), so daß es nachfolgend nach hinten verlagert werden kann. Hierzu öffnet das Viergelenk 15, wodurch die Hebel 20, 21 aus ihrer nahezu horizontalen Ausgangslage, bei der die Teile 4, 5 fluchtend voreinander liegen, aufwärts verschwenkt werden. In der frühen Öffnungsphase nach Figur 2 steht der hintere Hebel 20 nahezu vertikal, der vordere Hebel 21 weist schräg nach vorne aufwärts. Durch diese Art der Öffnung wird das vordere Teil unter dem hinteren Dachabschluß nach hinten weggezogen. Das Dach muß daher zur Einleitung der Öffnung des Heckdeckels 3 nur wenig mit seinem hinteren Dachabschluß aufschwenken. Parallel kann dann schon der Heckdeckel 3 öffnen. Die Öffnungs- und Schließbewegung des Daches ist somit beschleunigt. Bei weiterer Öffnung (Figur 3) wird das vordere Teil 4 nahezu parallel nach hinten verlagert, behält also seine horizontale Orientierung im wesentlichen bei. Das hintere Teil 5 verschwenkt um seine heckseitige Achse 10 aufwärts, allerdings nur mit einem kleinen Schwenkwinkel y, wodurch auch dessen hintere obere Kante 22 die Linie 23 der heckseitigen Fahrzeugbegrenzung nicht nach hinten überragt.

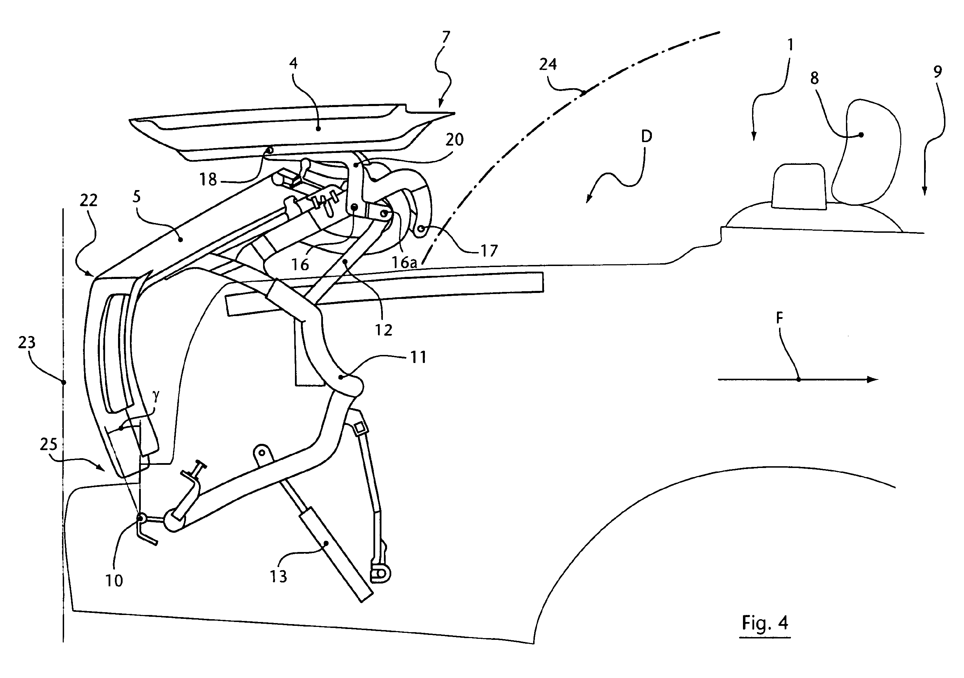

Dieses gilt auch in vollständig geöffnetem Zustand des Heckdeckels 3 (Fig. 4). Es ist somit in keiner Phase der Öffnung des Heckdeckels nach hinten ein Raumbedarf erforderlich, der über das Fahrzeuggrundmaß hinausginge.

Hierfür braucht das vordere Teil 4 nicht vollständig über das hintere Teil 5 verlagert zu werden, sondern es genügt eine teilweise Überlagerung. Weil der vordere Bereich 7 des vordersten Teils gleichzeitig mit der Rückwärtsverlagerung auch nach oben angehoben wird, bleibt ein Schwenkkreis 24 für die Dachablage (in Figur 4 angedeutet) frei. Zudem, und dies stellt einen wesentlichen Vorteil für das Design dar, kann in einem Stoßfängerbereich 25 auf eine tiefe Absenkung der Stoßstange oder das Vorsehen eines großen ausgenommenen Bereichs verzichtet werden, was bisher erforderlich war, wenn die hintere untere Kante 26 des hinteren Teils einen großen Schwenkweg hatte.

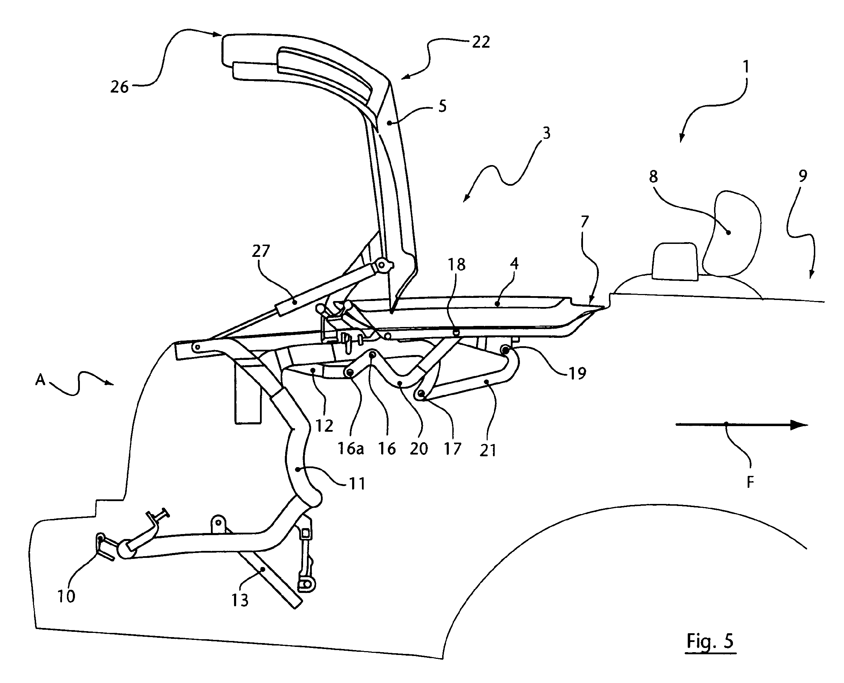

Bei gegensinnigem Öffnen des Heckdeckels 3 (Figur 5) zur Freigabe der Aufnahmeöffnung A für Gepäck verbleibt das vordere Teil 4 in Ruhestellung, nur das hintere Teil 5 wird bewegt. Dieses erfordert einen verminderten Kraftaufwand. Entsprechend klein und leicht können eventuelle Unterstützungsorgane, etwa Gasdruckzylinder 27, für diese Öffnung ausgebildet sein.

Insgesamt kann der Heckdeckel 3 mit seiner Bewegungsmechanik als kompakte und modulare Einheit ausgebildet sein. Da das vordere Teil 4 nicht gesondert an der Karosserie geführt wird, können die einzuhaltenden Toleranzen großzügig sein.

## Patentansprüche

1. Cabriolet-Fahrzeug (1) mit einem im rückwärtigen Fahrzeugbereich (2) unter einem Heckdeckel (3) ablegbaren Dach, wobei der Heckdeckel (3) in einem ersten Öffnungssinn zur Freigabe einer Durchtrittsöffnung (D) für das Dach und in einem zweiten Öffnungssinn zur Freigabe einer Aufnahmeöffnung (A) für Gepäck bewegbar ist und entlang zumindest einer im wesentlichen in Fahrzeugquerrichtung verlaufenden Trennfuge (6) in mehrere Teile (4;5) geteilt ist, wobei während der Heckdeckelöffnung zur Freigabe der Durchtrittsöffnung (D) für das Dach das in Fahrtrichtung (F) vorderste Teil (4) zumindest bereichsweise über ein weiter hinten liegendes Teil (5) verlagert wird,
**dadurch gekennzeichnet,**
**daß** das vorderste Teil (4) in Ruhestellung nahezu oder vollständig horizontal liegt und während der Öffnung des Heckdeckels zur Freigabe der Durchtrittsöffnung (D) für das Dach nahezu parallel aufwärts und heckwärts verlagert wird.

2. Cabriolet-Fahrzeug nach Anspruch 1,
**dadurch gekennzeichnet,**
**daß** während der Freigabe der Aufnahmeöffnung (A) für Gepäck das vorderste Teil (4) in Ruhe verbleibt.

3. Cabriolet-Fahrzeug nach einem der Ansprüche 1 oder 2,
**dadurch gekennzeichnet,**
**daß** genau eine Querfuge (6) vorhanden ist und der Heckdeckel (3) zweiteilig (4;5) ausgebildet ist.

4. Cabriolet-Fahrzeug nach einem der Ansprüche 1 bis 3,
**dadurch gekennzeichnet,**
**daß** das vorderste Teil (4) in Ruhestellung bei geschlossenem Dach einen rückwärtigen Dachabschluß untergreift.

5. Cabriolet-Fahrzeug nach Anspruch 4,
**dadurch gekennzeichnet,**
**daß** sich das vorderste Teil (4) bis in den Nahbereich einer Sitzreihe (8) des Fahrzeuginnenraums (9) erstreckt.

6. Cabriolet-Fahrzeug nach einem der Ansprüche 4 oder 5,
**dadurch gekennzeichnet,**
**daß** zumindest ein in Fahrtrichtung (F) vorderer Bereich (7) des vordersten Teils (4) mit einer Oberfläche in Anpassung an die Textilausstattung des Fahrzeuginnenraums (9) versehen ist.

7. Cabriolet-Fahrzeug nach einem der Ansprüche 1 bis 6,
**dadurch gekennzeichnet,**
**daß** bei vollständig geöffnetem Heckdeckel (3) zur Freigabe der Durchtrittsöffnung (D) für das Dach das vorderste Teil (4) nahezu oder vollständig horizontal steht.

8. Cabriolet-Fahrzeug nach einem der Ansprüche 2 bis 7,
**dadurch gekennzeichnet,**
**daß** das vordere (4) und das hintere Teil (5) des Heckdeckels (3) über zumindest ein Mehrgelenk (15) miteinander verbunden sind.

9. Cabriolet-Fahrzeug nach Anspruch 8,
**dadurch gekennzeichnet,**
**daß** das Mehrgelenk (15) als Viergelenk ausgebildet ist und zur Bewegung der Teile gegeneinander als Gelenkparallelogramm dient.

10. Cabriolet-Fahrzeug nach Anspruch 9,
**dadurch gekennzeichnet,**
**daß** das Mehrgelenk (15) über einen von zumindest einem Antriebsorgan (13) mittelbar oder unmittelbar beaufschlagbaren Steuerhebel (12) beweglich ist.

11. Cabriolet-Fahrzeug nach einem der Ansprüche 8 bis 10,
**dadurch gekennzeichnet,**
**daß** die Lenker (20;21) des Mehrgelenks (15) in Anpassung an die Relativbewegung der Teile (4;5) mehrfach gebogen sind.

## Claims

1. A convertible vehicle (1) comprising a roof which can be stowed underneath a rear cover (3) at the rear (2) of the vehicle, which rear cover (3) can be moved in a first opening direction to uncover a passage opening (D) for the roof and in a second opening direction to uncover a receiving opening (A) for luggage and is divided into several parts (4;5) along at least one joint (6) extending substantially in the transverse direction of the vehicle, wherein, while the rear cover is opened to uncover the passage opening (D) for the roof, the frontmost part (4) in the direction of travel (F) is moved at least partly over a part (5) located further at the rear, **characterised in that** the frontmost part (4) is nearly or completely horizontal in its resting position and is moved, nearly parallel, upwards and towards the rear while opening the rear cover to uncover the passage opening (D) for the roof.

2. The convertible vehicle according to claim 1, **characterised in that** the frontmost part (4) remains at rest while uncovering the receiving opening (A) for luggage.

3. The convertible vehicle according to any one of claims 1 or 2, **characterised in that** exactly one transverse joint (6) is provided and the rear cover (3) consists of two parts (4;5).

4. The convertible vehicle according to any one of claims 1 to 3, **characterised in that** the frontmost part (4), in its resting position, engages a rear roof-terminating portion from below when the roof is closed.

5. The convertible vehicle according to claim 4, **characterised in that** the frontmost part (4) extends as far as the vicinity of a row of seats (8) in the vehicle interior (9).

6. The convertible vehicle according to any one of claims 4 or 5, **characterised in that** the frontmost part (4) has at least a front region (7) in the direction of travel (F) provided with a surface adapted to the fabric lining of the vehicle interior (9).

7. The convertible vehicle according to any one of claims 1 to 6, **characterised in that**, when the rear cover (3) is fully open to uncover the passage opening (D) for the roof, the frontmost part (4) is nearly or completely horizontal.

8. The convertible vehicle according to any one of claims 2 to 7, **characterised in that** the frontmost part (4) and the rear part (5) of the rear cover (3) are connected to each other by at least one multiple joint (15).

9. The convertible vehicle according to claim 8, **characterised in that** said multiple joint (15) is provided as a four-bar linkage and serves as an articulated parallelogram for moving the parts with respect to each other.

10. The convertible vehicle according to claim 9, **characterised in that** the multiple joint (15) is movable by a control lever (12) acted upon indirectly or directly by at least one drive element (13).

11. The convertible vehicle according to any one of claims 8 to 10, **characterised in that** the links (20;21) of the multiple joint (15) are bent several times to adapt to the relative movement of the parts (4;5).

## Revendications

1. Véhicule cabriolet (1) comportant un toit escamotable en dessous d'un couvercle arrière (3) à l'arrière (2) dudit véhicule, ledit couvercle arrière (3) étant déplaçable dans un premier sens d'ouverture afin de libérer une ouverture de passage (D) pour le toit et dans un deuxième sens d'ouverture afin de libérer une ouverture de réception (A) pour des bagages et étant divisé en plusieurs parties (4;5) selon au moins une jointure (6) qui s'étend sensiblement en direction transversale dudit véhicule, et lorsque le couvercle arrière est ouvert afin de libérer l'ouverture de passage (D) pour le toit, la partie avant (4) en direction de marche (F) est déplacée au moins partiellement au-dessus d'une partie (5) plus arrière, **caractérisé en ce que** la partie avant (4) est presque ou complètement horizontale en position de repos et est déplacée presque parallèlement vers le haut et vers l'arrière lors de l'ouverture du couvercle arrière afin de libérer l'ouverture de passage (D) pour le toit.

2. Véhicule cabriolet selon la revendication 1, **caractérisé en ce que** la partie avant (4) reste en repos lors de la libération de l'ouverture de réception (A) pour des bagages.

3. Véhicule cabriolet selon l'une quelconque des revendications 1 ou 2, **caractérisé en ce que** l'on prévoit exactement une jointure transversale (6) et le couvercle arrière (3) est réalisé en deux parties (4;5).

4. Véhicule cabriolet selon l'une quelconque des revendications 1 à 3, **caractérisé en ce que** la partie avant (4), en position de repos, vient en prise par dessous dans une extrémité arrière de toit lorsque le toit est fermé.

5. Véhicule cabriolet selon la revendication 4, **caractérisé en ce que** la partie avant (4) s'étend jusqu'à proximité d'une rangée de sièges (8) à l'intérieur du véhicule (9).

6. Véhicule cabriolet selon l'une quelconque des revendications 4 ou 5, **caractérisé en ce qu'**au moins une région avant (7), en direction de marche (F), de la partie avant (4) présente une surface adaptée à la garniture textile de l'intérieur du véhicule (9).

7. Véhicule cabriolet selon l'une quelconque des revendications 1 à 6, **caractérisé en ce que**, lorsque le couvercle arrière (3) est complètement ouvert afin de libérer l'ouverture de passage (D) pour le toit, la partie avant (4) est presque ou complètement horizontal.

8. Véhicule cabriolet selon l'une quelconque des revendications 2 à 7, **caractérisé en ce que** la partie avant (4) et la partie arrière (5) du couvercle arrière (3) sont reliées l'une avec l'autre par au moins un ensemble à plusieurs articulations (15).

9. Véhicule cabriolet selon la revendication 8, **caractérisé en ce que** ledit ensemble à plusieurs articulations (15) est réalisé sous forme d'un ensemble à quatre articulations et sert de parallélogramme articulé pour le déplacement relatif desdites parties.

10. Véhicule cabriolet selon la revendication 9, **caractérisé en ce que** l'ensemble à plusieurs articulations (15) est déplaçable par un levier de commande (12) sur lequel agit, de manière indirecte ou directe, au moins un élément d'entraînement (13).

11. Véhicule cabriolet selon l'une quelconque des revendications 8 à 10, **caractérisé en ce que** les articulations (20;21) de l'ensemble à plusieurs articulations (15) sont coudées plusieurs fois pour s'adapter au déplacement relatif des parties (4;5).
